# EUROPEAN PATENT APPLICATION

(11) **EP 4 296 995 A1**
(43) Date of publication of application: **27.12.2023**
(21) Application number: 22755931.7
(22) Date of filing: 02.02.2022
(51) Int. Cl.: G09B 29/00, G09B 29/10, G08G 1/0969, G01C 21/36

(54) **MAP DISPLAY SYSTEM**

(30) Priority: 19.02.2021 JP 2021024943
(71) Applicant: AISIN CORPORATION, Kariya-shi, Aichi 448-8650 (JP); TOYOTA JIDOSHA KABUSHIKI KAISHA, Toyota-shi Aichi 471-8571 (JP)
(72) Inventor: MURAKI Yuji, Kariya-shi, Aichi 448-8650 (JP); NISHIMURA Natsuki, Kariya-shi, Aichi 448-8650 (JP); HASTIR Sebastien, Kariya-shi, Aichi 448-8650 (JP); RENQUIN Emmanuel, Kariya-shi, Aichi 448-8650 (JP); PIRLET Olivier, Kariya-shi, Aichi 448-8650 (JP); PRONNIER Emmanuel, Kariya-shi, Aichi 448-8650 (JP); NAKAMURA Taiki, Toyota-shi, Aichi 471-8571 (JP)
(74) Representative: TBK
(86) International application number: PCT/JP2022/003939
(87) International publication number: WO 2022/176610

(57) **Abstract**

There is provided a technique that can provide a user with guidance on information related to a given region, before the user enters the given region. A map display system includes a current location obtaining part that obtains a current location of a vehicle; a planned travel route obtaining part that obtains a planned travel route of the vehicle; a map information obtaining part that obtains map information; an entry detecting part that detects, based on the current location and the map information, an entry of the vehicle into a first region classified by first classification; and a guidance part that provides, when an entry of the vehicle into the first region is detected, guidance on information about a second region which is a region in which the planned travel route is present among regions classified by second classification for subdividing the first region.

## Description

### TECHNICAL FIELD

The present invention relates to a map display system.

### BACKGROUND ART

Conventionally, there is known a technique for providing guidance on information related to a region. For example, Patent Literature 1 discloses a technique in which when a current location of a vehicle differs from a region in which a driver lives, if there is a special travel rule, then the special travel rule is displayed on a display device.

### CITATIONS LIST

### PATENT LITERATURE

Patent Literature 1: JP 2008-122281 A

### SUMMARY OF INVENTION

### TECHNICAL PROBLEMS

In the conventional technique, unless the vehicle enters a region having a special travel rule, guidance on the special travel rule is not provided. Thus, there has been difficulty in taking action against the special travel rule before entering the region.

The present invention is made in view of the above-described problem, and provides a technique that can increase a possibility that guidance on information related to a given region can be provided to a user before the user enters the given region.

### SOLUTIONS TO PROBLEMS

To provide the above-described technique, a map display system includes: a current location obtaining part that obtains a current location of a vehicle; a planned travel route obtaining part that obtains a planned travel route of the vehicle; a map information obtaining part that obtains map information; an entry detecting part that detects, based on the current location and the map information, an entry of the vehicle into a first region classified by first classification; and a guidance part that provides, when an entry of the vehicle into the first region is detected, guidance on information about a second region, the second region being a region in which the planned travel route is present among regions classified by second classification for subdividing the first region.

Namely, in the map display system, guidance on information about a second region in which the vehicle is planned to travel is provided, triggered by an entry of the vehicle into a first region. Thus, a possibility can be increased that guidance on information related to a second region can be provided to a user on board the vehicle before the user enters the second region. Hence, it becomes possible for the user to take action according to the information before entering the second region.

### BRIEF DESCRIPTION OF DRAWINGS

FIG. 1 is a block diagram of a navigation system including a map display system.
FIG. 2 is a flowchart of a guidance process.
FIG. 3 is a diagram showing exemplary display of a map and guidance.

### DESCRIPTION OF EMBODIMENTS

Here, an embodiment of the present invention will be described in accordance with the following order:
(1) Configuration of a navigation system;
(2) Guidance process; and
(3) Other embodiments.

### (1) Configuration of a navigation system:

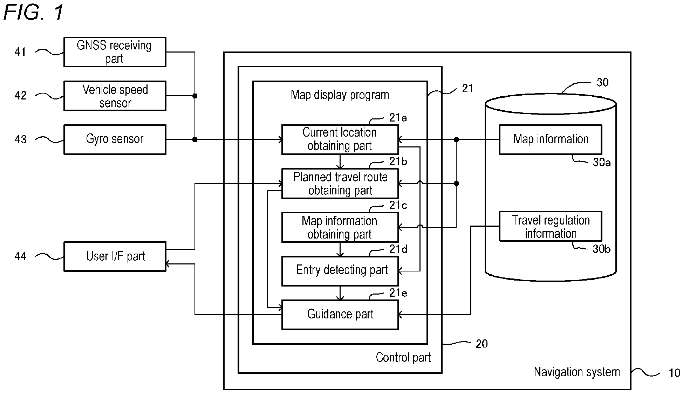

FIG. 1 is a block diagram showing a configuration of a navigation system 10 including a map display system according to one embodiment of the present invention. The navigation system 10 is provided in a vehicle, and includes a control part 20 including a CPU, a RAM, a ROM, etc., and a recording medium 30. The navigation system 10 can execute, by the control part 20, programs stored in the recording medium 30 or the ROM. The recording medium 30 has map information 30a and travel regulation information 30b recorded therein in advance.

The map information 30a is information used to identify the location of the vehicle and a facility which is a guidance target, and includes node data representing the location of a node set on a road on which the vehicle travels, etc.; shape interpolation point data representing the location of a shape interpolation point for identifying the shape of a road between nodes, etc.; link data representing a link between nodes; ground object data representing the location of a ground object present on a road or around the road, etc.; polygon data representing a boundary of a region; and the like. Note that the link data is data representing a road section having an intersection as its endpoint, and is associated with various types of information such as a road attribute.

The ground object data is information indicating various types of ground objects, and the ground objects include facilities. Ground object data representing a facility includes information indicating an attribute of the facility. The attribute of the facility includes information indicating the type of the facility, e.g., a store or a public facility. In the present embodiment, a store that sells equipment to be prepared by a user to comply with a travel regulation is associated with information indicating the equipment.

The polygon data is information indicating a polygon representing a boundary of a region. The polygon data is, for example, information indicating coordinates indicating the vertices of a polygon; and an attribute of a region enclosed by the polygon that connects the vertices. The attributes indicate the result of classifying regions into a plurality of types of categories. In the present embodiment, the polygon data includes classification of countries (first classification) and classification of cities present in each country (second classification). Namely, polygon data representing a border is associated with the name of a country enclosed by the border, and polygon data representing a boundary of a city is associated with the name of the city that is marked off and enclosed by the boundary. Note that a mode of information for indicating a boundary of a region is not limited to polygon data. For example, a configuration may be adopted in which a road section that passes through a boundary of a region, or a node corresponding to a boundary of a region is associated with information indicating that it is a boundary or with information indicating a country or a city that is marked off by the boundary.

The travel regulation information 30b is information indicating a travel regulation applied to a road section. The travel regulation information 30b can include various regulations. In the present embodiment, the travel regulation information 30b includes regulations imposed on vehicles and regulations to be complied with by users on board the vehicles. The regulations imposed on vehicles correspond, for example, to a speed regulation and an emission regulation. The emission regulation is defined by, for example, the upper limit to the amount of a specific substance contained in exhaust gas emitted from a vehicle by traveling a unit distance. In the present embodiment, travel regulation information 30b is defined such that information indicating the content of a regulation is associated with a region (at least one of a country name and a city name) to which the regulation is applied.

The regulations to be complied with by users on board the vehicles correspond, for example, to regulations that require preparation of various types of certification or preparation of various types of equipment. More specifically, the regulations include, for example, an obligation to present a sticker serving as a certificate. The obligation to present a sticker is an obligation to attach a sticker indicating that a vehicle is a specific vehicle to a windshield, etc., when the vehicle enters a specific region. The specific vehicle corresponds, for example, to a vehicle that uses power of a system with a smaller amount of hazardous substances contained in exhaust gas than a reference amount. In a case of this regulation, travel regulation information 30b is defined such that information indicating that, for example, the action of attaching a sticker to a windshield, etc., is required is associated with a region (at least one of a country name and a city name) to which the regulation is applied.

In addition, the regulations to be complied with by users on board the vehicles include various other regulations. For example, when various types of equipment are required upon traveling, information indicating required equipment is travel regulation information 30b, and is associated with link data. In a case of this regulation, travel regulation information 30b is defined such that information indicating that, for example, the action of preparing equipment is required is associated with a region (at least one of a country name and a city name) to which the regulation is applied. Note that for the equipment, various types of equipment are assumed and the equipment includes, for example, safety equipment such as fire extinguishers and expendables such as light bulbs.

The vehicle of the present embodiment includes a GNSS receiving part 41, a vehicle speed sensor 42, a gyro sensor 43, and a user I/F part 44. The GNSS receiving part 41 is a device that receives Global Navigation Satellite System signals, and receives radio waves from navigation satellites and outputs a signal for calculating a current location of the vehicle through an interface which is not shown. The control part 20 obtains the signal and thereby obtains a current location of the vehicle. The vehicle speed sensor 42 outputs a signal corresponding to the rotational speed of wheels provided in the vehicle. The control part 20 obtains the signal through an interface which is not shown, and thereby obtains vehicle speed. The gyro sensor 43 detects angular acceleration of the vehicle for a turn in a horizontal plane, and outputs a signal corresponding to the orientation of the vehicle. The control part 20 obtains the signal and thereby obtains a traveling direction of the vehicle. The vehicle speed sensor 42, the gyro sensor 43, and the like, are used to identify a travel path of the vehicle. In the present embodiment, a current location is identified based on the point of departure and travel path of the vehicle, and the current location of the vehicle identified based on the point of departure and the travel path is corrected based on an output signal from the GNSS receiving part 41.

The user I/F part 44 is an interface part for accepting, as input, instructions from a user and providing various types of information to the user, and includes a touch panel display, switches, etc., a speaker, etc., which are not shown. Namely, the user I/F part 44 includes an image display part, an audio output part, and a user's instruction input part.

By a function of a navigation program which is not shown, the control part 20 can provide route guidance that instructs a user on board the vehicle on a planned travel route. Furthermore, in the present embodiment, as a function of the navigation program, the control part 20 can perform a function of displaying a map on the display of the user I/F part 44, and can perform display of travel regulation information 30b together with the map display.

The display is implemented by a map display program 21. When the map display program 21 is executed, the control part 20 functions as a current location obtaining part 21a, a planned travel route obtaining part 21b, a map information obtaining part 21c, an entry detecting part 21d, and a guidance part 21e. The current location obtaining part 21a functions to obtain a current location of the vehicle. By the function of the current location obtaining part 21a, the control part 20 obtains a current location of the vehicle based on output information from the GNSS receiving part 41, the vehicle speed sensor 42, and the gyro sensor 43.

The planned travel route obtaining part 21b functions to obtain a planned travel route of the vehicle. By the function of the planned travel route obtaining part 21b, the control part 20 accepts user's input of a destination through the input part of the user I/F part 44, and searches for a planned travel route from the current location of the vehicle to the destination. The search may be performed by various techniques. For example, costs are associated with road sections represented by the link data included in the map information 30a, and a search is performed by performing a route search process by, for example, an algorithm that performs a route search so as to obtain a minimum sum of costs of road sections included in a route from a point of departure to a destination. When a planned travel route is searched and travel of the vehicle starts, the control part 20 controls the user I/F part 44 to show the planned travel route on a map displayed on the display part and to output, from the output part, voice instructing the user on a traveling direction, before an intersection where the vehicle travels in a direction other than a straight-ahead direction.

The map information obtaining part 21c functions to obtain map information. The control part 20 obtains, from the map information 30a, information for displaying a map including the current location on a predetermined scale on the display part of the user I/F part 44. In addition, the control part 20 can obtain polygon data included in the map information 30a, etc.

The entry detecting part 21d functions to detect, based on the current location and the map information, an entry of the vehicle into a first region classified by the first classification. In the present embodiment, the first classification is classification of countries. Hence, in the present embodiment, by the function of the entry detecting part 21d, when the vehicle has passed through a border, the control part 20 detects that the vehicle has entered a first region.

Specifically, the control part 20 identifies a road section in which the current location is present, based on the map information 30a. In addition, the control part 20 determines whether the road section in which the current location is present overlaps a boundary of a country, by referring to polygon data included in the map information 30a. When the road section in which the current location is present overlaps a boundary of a country, the control part 20 identifies a border based on the polygon data and compares the current location with the border. Then, when the current location has passed through the border, the control part 20 detects that the vehicle has entered a new country (first region). Note that the detection of an entry may be performed in various manners, and an entry may be considered to have been detected when a road section in which the current location is present overlaps a boundary of a country, or an entry may be considered to have been detected when the vehicle exits the road section.

The guidance part 21e functions to display various types of guidance on the display part of the user I/F part 44. In the present embodiment, the guidance includes guidance on regions. In a case of providing guidance on regions, the control part 20 provides guidance on information about a first region and information about a second region which is a region in which the planned travel route is present among regions classified by the second classification for subdividing the first region.

In the present embodiment, the control part 20 provides guidance on travel regulation information 30b associated with each region, triggered by an entry of the vehicle into a first region, i.e., detection of crossing of a border. Namely, when the vehicle has passed through a border, by the function of the guidance part 21e, the control part 20 provides guidance on travel regulation information 30b imposed by a country that the vehicle has entered, and travel regulation information 30b imposed by a city which is present in the country and in which the planned travel route is present. Hence, the control part 20 identifies a country that the vehicle has entered, by referring to polygon data included in the map information 30a. Then, the control part 20 identifies a travel regulation associated with the country that the vehicle has entered, by referring to travel regulation information 30b.

Furthermore, the control part 20 identifies road sections included in the planned travel route, and when there is a road section belonging to a city having travel regulation information 30b associated therewith, the control part 20 identifies the city and a travel regulation, based on the travel regulation information 30b. Then, the control part 20 controls the user I/F part 44 to display a country in which the current location of the vehicle is present, travel regulation information 30b applied to the country, a city in which the planned travel route is present, and travel regulation information 30b applied to the city.

According to the present embodiment described above, when the user has passed through a border and entered a different country, the user can recognize a travel regulation to be complied with in the country that the user has entered. Furthermore, the user can recognize a travel regulation to be complied with in a city in which a planned travel route is present. Since guidance on the travel regulation to be complied with in the city is provided when the vehicle has passed through a border, it is possible to increase a possibility that guidance on a travel regulation for the city can be provided to the user before the user enters the city. Thus, it becomes possible for the user to take action according to the travel regulation before entering the city.

### (2) Guidance process:

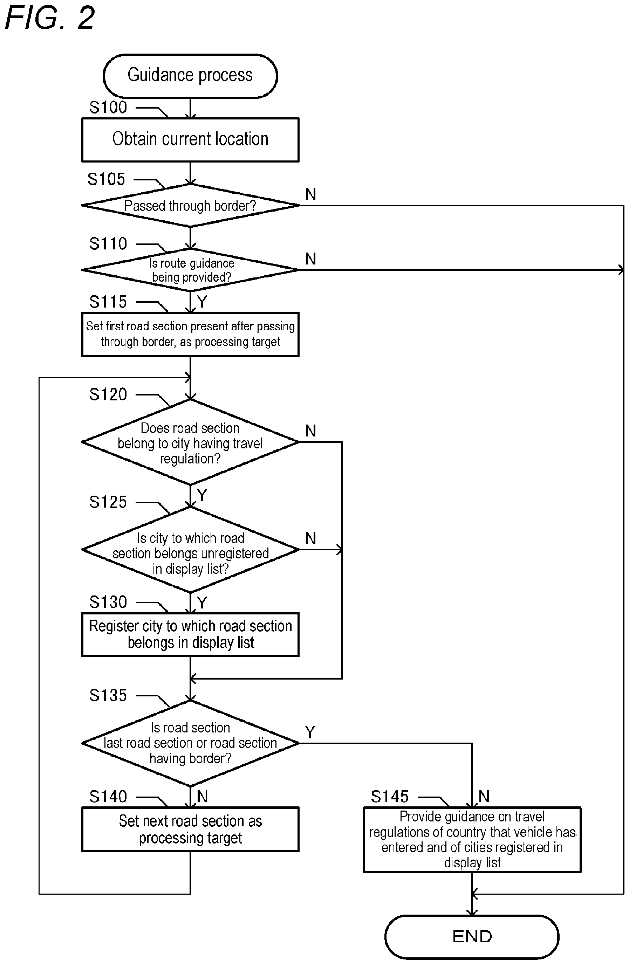

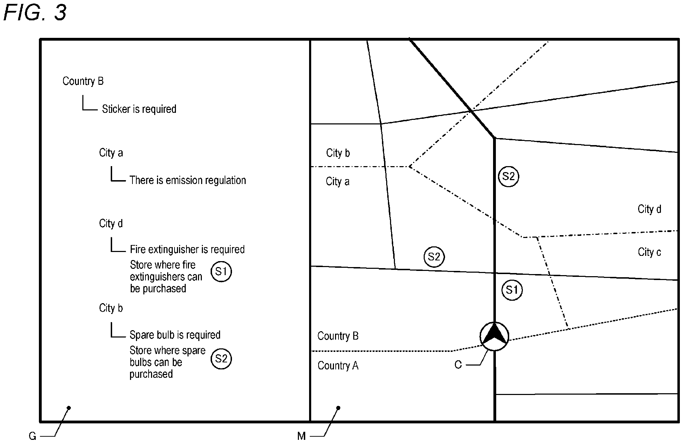

FIG. 2 is a flowchart of a guidance process. FIG. 3 is a diagram showing exemplary guidance. FIG. 3 shows exemplary display performed on the display part of the user I/F part 44. In the exemplary display, a map M including a current location C of the vehicle is displayed on the right side and guidance G on travel regulations is displayed on the left side. In addition, in the map, a road is represented by a solid line, a border is represented by a broken line, and a boundary of a city is represented by a dashed-dotted line. Note, however, that a bold solid line shown overlapping roads represents a planned travel route of the vehicle.

In the present embodiment, a guidance process is performed every certain period (e.g., timing that is synchronized with rendering of a map on the display). When a guidance process starts, by the function of the current location obtaining part 21a, the control part 20 obtains a current location (step S100). Namely, the control part 20 obtains a current location of the vehicle based on output information from the GNSS receiving part 41, the vehicle speed sensor 42, and the gyro sensor 43.

Then, the control part 20 determines whether the vehicle has passed through a border (step S 105). Namely, by the functions of the map information obtaining part 21c and the entry detecting part 21d, the control part 20 identifies a road section in which the current location is present, based on the map information 30a. In addition, the control part 20 identifies a border around the current location by referring to polygon data included in the map information 30a, and identifies a road section that overlaps the border. Then, when the road section in which the current location is present is the road section that overlaps the border, the control part 20 compares the current location with the border, and when the current location has moved from one side to the opposite side of the border, the control part 20 determines that the vehicle has passed through the border. In an example shown in FIG. 3, the current location C of the vehicle is immediately after crossing a border between country A and country B from a country A side to a country B side. In this case, the control part 20 determines at step S105 that the vehicle has passed through a border.

If it is not determined at step S105 that the vehicle has passed through a border, then the control part 20 ends the guidance process. On the other hand, if it is determined at step S105 that the vehicle has passed through a border, then by the function of the planned travel route obtaining part 21b, the control part 20 determines whether route guidance is being provided (step S110). Namely, when travel of the vehicle starts in a state in which a planned travel route has been searched, the control part 20 provides route guidance that instructs the user on the planned travel route. At step S110, the control part 20 determines whether the route guidance is being provided. In the example shown in FIG. 3, a planned travel route ahead of the current location C of the vehicle is represented by a bold solid line, and route guidance is being provided. In this case, the control part 20 determines at step S110 that route guidance is being provided.

If it is not determined at step S110 that route guidance is being provided, then the control part 20 ends the guidance process. Namely, when route guidance is not being provided, a planned travel route is not identified, and thus, it is considered that a city to which a planned travel route belongs cannot be identified, and the control part 20 does not provide guidance on travel regulation information 30b. Note that even in this case, guidance may be provided on travel regulation information 30b to be complied with in a country that the vehicle has entered after passing through the border.

If it is determined at step S110 that route guidance is being provided, then by the function of the guidance part 21e, the control part 20 sets the first road section present after passing through the border, as a processing target (step S115). Namely, in a loop process from step S120 to S140, the control part 20 repeats the process using, as a processing target, each road section included in the planned travel route to a destination in order of nearest from the current location. Hence, the control part 20 first identifies a road section on the planned travel route on which the vehicle is planned to travel after a road section in which the current location is present, and sets the road section as a processing target.

Then, by the function of the guidance part 21e, the control part 20 determines whether the processing-target road section is a road section belonging to a city having a travel regulation (step S120). Namely, the control part 20 identifies a city to which the processing-target road section belongs, based on the map information 30a and determines whether there is travel regulation information 30b associated with the city. If it is determined that there is travel regulation information 30b associated with the city, then the control part 20 determines that the processing-target road section is a road section belonging to a city having a travel regulation.

If it is determined at step S120 that the processing-target road section is a road section belonging to a city having a travel regulation, then the control part 20 determines whether the city to which the processing-target road section belongs is unregistered in a display list (step S125). Namely, in the present embodiment, in the loop process from step S120 to S140, cities whose guidance on travel regulation information 30b is to be provided are sequentially registered in the display list, by which cities which are display targets are determined.

Hence, if the control part 20 determines that the city to which the processing-target road section belongs is unregistered in a display list, then by the function of the guidance part 21e, the control part 20 registers the city to which the road section belongs in the display list (step S 130). On the other hand, if it is not determined at step S120 that the processing-target road section is a road section belonging to a city having a travel regulation, or if it is not determined at step S125 that the city to which the processing-target road section belongs is unregistered in a display list, then the control part 20 skips step S130.

When step S130 has been performed or skipped, by the function of the guidance part 21e, the control part 20 determines whether the processing-target road section is the last road section or a road section having a border (step S135). Namely, the control part 20 sequentially sets, as a processing target, road sections included in the planned travel route from a road section on a current location side to a road section on a destination side. Hence, a road section that reaches the destination is the last road section of the planned travel route, and when step S120 to S130 have been performed using the road section as a processing target, there is no next road section. Hence, the control part 20 determines whether the processing-target road section is the last road section, based on the planned travel route. Furthermore, in the present embodiment, guidance is triggered by passage of a border, and thus, when the vehicle crosses a border again on the planned travel route, road sections present before crossing the border are used as processing targets. Hence, the control part 20 determines whether the processing-target road section overlaps a border.

If it is determined by the above-described determination that the processing-target road section does not correspond to either the last road section or a road section having a border, then by the function of the guidance part 21e, the control part 20 sets a next road section as a processing-target road section (step S140). Namely, the control part 20 sets a next road section connected to the road section which is the current processing target on the planned travel route, as a road section which is a new processing target. When step S140 has been performed, the control part 20 repeats processes at and after step S120.

On the other hand, if it is determined at step S135 that the processing-target road section corresponds to at least one of the last road section and a road section having a border, then by the function of the guidance part 21e, the control part 20 provides guidance on travel regulations of the country that the vehicle has entered and of cities registered in the displayed list (step S145). Namely, by referring to the travel regulation information 30b, the control part 20 obtains the content of a travel regulation associated with the country into which the vehicle is determined to have entered at step S105. In addition, by referring to the travel regulation information 30b, the control part 20 obtains the content of travel regulations associated with cities registered in the display list. Then, the control part 20 displays the obtained travel regulations and regions on the display part of the user I/F part 44 such that they are associated with each other.

In the example shown in FIG. 3, it is assumed that there is travel regulation information 30b of country B and there is travel regulation information 30b of city a, city c, city b, and city d which are cities in country B. In this case, in the course of processes from step S120 to S140, road sections ahead of the current location C of the vehicle are sequentially set as a processing target, and cities are sequentially registered in the display list. The first road section set as a processing target is a road section present after a road section in which the current location is present, and belongs to city a. Thus, by performing the processes using the road section as a processing target, city a is registered in the display list.

In addition, a processing-target road section sequentially moves ahead along the planned travel route, and when a road section belonging to city a is in a state of being set as a processing target, there is no change in the display list. On the other hand, when a processing-target road section goes into a state of belonging to city d, city d is registered in the display list. Likewise, when a processing-target road section goes into a state of belonging to city b, city b is registered in the display list. There is a travel regulation in city c, too, but since the planned travel route is not present in city c, city c is not registered in the display list.

When step S145 is performed in a state in which such registration has been performed, guidance on travel regulations is provided as shown on the left side of FIG. 3. In the present embodiment, guidance is provided such that a region is associated with a travel regulation of the region. Specifically, when there is a travel regulation of a country to which the current location belongs, the control part 20 displays the country and the travel regulation such that they are associated with each other. In FIG. 3, display is performed such that presentation of a sticker is required upon traveling country B.

In addition, when the display list has cities registered therein, the control part 20 displays the cities and travel regulations in order of registration in the display list, such that they are associated with each other. The order of registration in the display list corresponds to the order of travel on the planned travel route, and thus, in the present embodiment, cities having travel regulations are displayed in order of travel on the planned travel route, and furthermore, travel regulations are displayed so as to be associated with the cities.

FIG. 3 shows that there is an emission regulation in city a, there is a regulation that requires vehicles to be equipped with a fire extinguisher upon traveling city d, and there is a regulation that requires vehicles to have a spare light bulb upon traveling city b. Display of the regulations of cities d and b shows that preparation of equipment is required, and thus, the display is guidance on action that needs to be taken to follow the regulations indicated by the travel regulation information 30b. Thus, based on the guidance, the user can know action that needs to be taken to comply with the travel regulations. For example, when the vehicle is not equipped with a fire extinguisher, the user can recognize that there is a need to purchase a fire extinguisher before entering city d.

In the present embodiment, furthermore, by the function of the guidance part 21e, the control part 20 provides guidance on facilities available for the user to take necessary action to follow the regulations indicated by the travel regulation information 30b. In the example shown in FIG. 3, the facilities are stores where equipment necessary to comply with the travel regulations can be purchased, and a store where fire extinguishers can be purchased is represented as S1, and a store where spare bulbs can be purchased is represented as S2. In addition, in FIG. 3, the locations of the stores S1 and S2 are displayed as icons on the map M, and in the guidance G, icons of the stores S1 and S2 are shown together with guidance on travel regulations.

To perform such display, the control part 20 identifies travel regulations to be displayed in the guidance G and when the travel regulations to be displayed include a regulation that requires preparation of equipment, the control part 20 identifies stores with which is associated information indicating the equipment, by referring to ground object data included in the map information 30a. Furthermore, the control part 20 identifies, from among the identified stores, a store present in a region before a city having the travel regulation (a region in a predetermined area from a portion of the planned travel route between the city and the current location).

Then, based on ground object data of the identified store, the control part 20 identifies the location of the store and controls the display part of the user I/F part 44 to display an icon indicating the store at a corresponding location on the map M. Furthermore, the same icon is displayed so as to be associated with the display location of guidance on the travel regulation in the guidance G. According to this configuration, the user can easily recognize the location of a store where the user is to take necessary action to comply with a travel regulation. Thus, it is possible for the user to take action such as purchasing equipment, before entering a city having the travel regulation.

### (3) Other embodiments:

The above-described embodiment is an example for carrying out the present invention, and various other embodiments can also be adopted provided that guidance on a travel regulation of a region to which a planned travel route belongs is provided before entering the region. For example, the map display system may be a device mounted on a vehicle, etc., or may be a device implemented by a portable terminal, or may be a system implemented by a plurality of devices (e.g., a client and a server).

At least one of the current location obtaining part 21a, the planned travel route obtaining part 21b, the map information obtaining part 21c, the entry detecting part 21d, and the guidance part 21e that are included in the map display system may be present divided into a plurality of devices. For such a configuration, various configurations are assumed. For example, a configuration may be adopted in which the result of rendering a map, the result of searching for a route, etc., are obtained by the navigation system making a request to a server through communication. Needless to say, some configurations of the above-described embodiment may be omitted or processing order may be changed or omitted.

The planned travel route obtaining part may be configured in any manner as long as a planned travel route of the vehicle can be obtained. The planned travel route may be, as described above, a route searched as a route to a destination set by the user, or may be an estimated route. The estimation of a route may be performed by various techniques. For example, it is possible to adopt a configuration in which a road along which the vehicle travels from a current location of the vehicle is estimated to be a route. The road along which the vehicle travels may be identified by various techniques. For example, it is possible to adopt a configuration in which roads of the same attribute or a road whose traveling direction at an intersection is closest to a straight-ahead direction is/are considered to be a road(s) along which the vehicle travels.

The entry detecting part may be configured in any manner as long as an entry of the vehicle into a first region classified by the first classification can be detected based on a current location and map information. Namely, the map information includes information indicating a region to which each road belongs, and the region is defined by a plurality of types of classification. The detection of an entry may be detection of the vehicle having entered or may be detection of the vehicle planned to enter in the near future. For the latter case, it may be detected that it is certain or estimated that the vehicle enters a first region if the vehicle continues traveling.

The guidance part may be configured in any manner as long as the guidance part can provide, when an entry of the vehicle into a first region is detected, guidance on information about the first region and information about a second region which is a region in which a planned travel route is present among regions classified by the second classification for subdividing the first region. Namely, the guidance part provides guidance on information about a wide region and information about a narrower region through which a planned travel route passes, triggered by an entry into a first region that belongs to classification of wide areas.

The information about a first region and the information about a second region each may be any information associated with the region. Thus, in addition to travel regulation information such as that in the above-described embodiment, various types of information may be provided. Whatever information is provided, the user can recognize information about a second region before reaching the second region.

Furthermore, it is preferred that the information about a first region and the information about a second region be information about travel of the vehicle, and these pieces of information are not limited to travel regulation information such as that in the above-described embodiment. For example, a configuration in which these pieces of information are traffic information may be adopted. The traffic information includes various types of information and includes, for example, traffic congestion information and information on construction. In this case, for example, the information about a first region includes information indicating that due to a holiday season, there is increased traffic congestion in the entire first region over other periods. The information about a second region includes traffic congestion information of roads included in a planned travel route.

This configuration can be implemented by, for example, a configuration in which the navigation system 10 shown in the above-described FIG. 1 includes a communication part, and traffic information can be obtained through the communication part. Namely, the configuration can be implemented by, for example, a configuration in which when the control part 20 has detected an entry by the function of the entry detecting part 21d, by the function of the guidance part 21e, the control part 20 obtains, through the communication part, traffic information of a first region and a second region and provides guidance on the traffic information. According to this configuration, the user can grasp traffic information to be noted upon traveling the entire first region and traffic information to be noted upon traveling on a planned travel route.

The second classification may be any classification for subdividing a first region. Namely, a twenty-second region is a region, at least part of which is present in a first region, and is a narrower region than the first region. Such classification includes, for example, administrative division. Specifically, for example, as in the above-described embodiment, first classification is classification of countries and second classification is classification of cities. Needless to say, the classification may be other types of classification. For example, a configuration may be adopted in which the first classification is classification of prefectures or states and the second classification is classification of cities. In addition, for example, a configuration may be adopted in which the first classification is classification of wider areas than countries (e.g., the EU zone) and the second classification is countries.

Furthermore, the trigger for guidance may be various triggers, and a trigger may be set such that guidance on information on a city present along a border is also provided before entering the city. For example, a configuration may be adopted in which guidance on information is provided when the vehicle has reached a point at a predetermined distance before a city present along a border. In a case of the example shown in FIG. 3, guidance on at least travel regulation information 30b of city a may be provided before passing through a border of country A.

Furthermore, a technique in which as in the present invention, guidance on a travel regulation of a region to which a planned travel route belongs is provided before entering the region is also applicable as a program or a method. In addition, it can be assumed that the system, the program, or the method such as that described above is implemented as a single device, or implemented by a plurality of devices, or implemented using a component shared with each part included in a vehicle, and includes various modes. For example, it is possible to provide a navigation system, a method, or a program that includes a device such as that described above. In addition, changes can be made as appropriate, e.g., a part is software and a part is hardware. Furthermore, the invention is also feasible as a recording medium for a program that controls the system. Needless to say, the recording medium for software may be a magnetic recording medium or may be a semiconductor memory, and any recording medium to be developed in the future can also be considered exactly in the same manner.

### REFERENCE SIGNS LIST

10: Navigation system, 20: Control part, 21: Map display program, 21a: Current location obtaining part, 21b: Planned travel route obtaining part, 21c: Map information obtaining part, 21d: Entry detecting part, 21e: Guidance part, 30: Recording medium, 30a: Map information, 30b: Travel regulation information, 41: GNSS receiving part, 42: Vehicle speed sensor, 43: Gyro sensor, and 44: User I/F part

## Claims

1. A map display system comprising:
a current location obtaining part that obtains a current location of a vehicle;
a planned travel route obtaining part that obtains a planned travel route of the vehicle;
a map information obtaining part that obtains map information;
an entry detecting part that detects, based on the current location and the map information, an entry of the vehicle into a first region classified by first classification; and
a guidance part that provides, when an entry of the vehicle into the first region is detected, guidance on information about a second region, the second region being a region in which the planned travel route is present among regions classified by second classification for subdividing the first region.

2. The map display system according to claim 1, wherein the information is travel regulation information.

3. The map display system according to claim 2, wherein the guidance part provides guidance on action that needs to be taken to follow a regulation indicated by the travel regulation information.

4. The map display system according to claim 3, wherein the guidance part provides guidance on a facility for taking the action.

5. The map display system according to claim 4, wherein the facility is present before a region having the regulation.

6. The map display system according to claim 1, wherein the information is traffic information.

7. The map display system according to any one of claims 1 to 6, wherein the detection of an entry of the vehicle into the first region is detection of the vehicle having entered the first region.

8. The map display system according to claim 7, wherein the guidance part provides guidance on the information about the second region before the vehicle enters the second region, the second region being present along a boundary of the first region.

9. The map display system according to any one of claims 1 to 6, wherein the detection of an entry of the vehicle into the first region is detection of the vehicle planned to enter the first region.

10. The map display system according to any one of claims 1 to 9, wherein the guidance part simultaneously provides guidance on all pieces of the information about the second region in which the planned travel route is present, the second region being included in the first region in which an entry of the vehicle is detected.

11. The map display system according to any one of claims 1 to 10, wherein the guidance part provides guidance on the information about the first region.

12. The map display system according to claim 11, wherein the guidance part simultaneously provides guidance on
all pieces of the information about the first region in which an entry of the vehicle is detected, and
all pieces of the information about the second region in which the planned travel route is present, the second region being included in the first region in which an entry of the vehicle is detected.
